(19) Europäisches Patentamt / European Patent Office / Office européen des brevets

(11) **EP 2 163 871 A1**

(12) **DEMANDE DE BREVET EUROPEEN**

(43) Date de publication:
**17.03.2010 Bulletin 2010/11**

(51) Int Cl.:
***G01J 5/24*** *(2006.01)*

(21) Numéro de dépôt: **09305793.3**

(22) Date de dépôt: **28.08.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **16.09.2008 FR 0856209**

(71) Demandeur: **ULIS**
**38113 Veurey Voroize (FR)**

(72) Inventeurs:
• **Legras, Olivier**
  **38500, VOIRON (FR)**
• **Minassian, Christophe**
  **38340, VOREPPE (FR)**

(74) Mandataire: **Vuillermoz, Bruno et al**
  **Cabinet Laurent & Charras**
  **"Le Contemporain"**
  **50, Chemin de la Bruyère**
  **69574 Dardilly Cédex (FR)**

(54) **Dispositif pour la détection d'un rayonnement infrarouge comportant un bolomètre et procédé de lecture d'un tel bolomètre intégré dans une matrice de bolomètres**

(57) L'invention a pour objet un dispositif pour la détection d'un rayonnement infrarouge comportant un bolomètre résistif d'imagerie (140).

Selon l'invention, le dispositif comporte :
■ des moyens (16, 38 ; 16, 24, 38 ; 16, 140 ; 16, 24) de mesure d'une dérive de la résistance électrique dudit bolomètre (140) par rapport à une valeur de référence de la résistance électrique dudit bolomètre (140) correspondant à des conditions prédéterminées de fonctionnement dudit bolomètre (140); et
■ des moyens (34) de correction des effets de ladite dérive ou des moyens de correction de ladite dérive de la résistance.

Fig. 2

EP 2 163 871 A1

**Description**

**DOMAINE DE L'INVENTION**

La présente invention a trait au domaine de l'imagerie infrarouge et de la pyrométrie bo lométrique.

Plus particulièrement, la présente invention concerne un dispositif pour la détection d'un rayonnement infra-rouge comportant un bolomètre résistif d'imagerie. Elle concerne également un système comprenant une matrice de tels dispositifs, ainsi qu'un procédé de lecture d'un bolomètre d'imagerie intégré dans un tel système.

**ETAT ANTERIEUR DE LA TECHNIQUE**

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés "détecteurs quantiques" qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur élémentaire non refroidi associe généralement :

- des moyens d'absorption du rayonnement infrarouge et de conversion de celui-ci en chaleur ;
- des moyens d'isolation thermique du détecteur, de telle sorte à permettre à celui-ci de s'échauffer sous l'action du rayonnement infrarouge ;
- des moyens de thermométrie qui, dans le cadre d'un détecteur bolométrique, mettent en oeuvre un élément résistif ;
- et des moyens de lecture des signaux électriques fournis par les moyens de thermométrie.

Les détecteurs destinés à l'imagerie infrarouge sont classiquement réalisés sous la forme d'une matrice de détecteurs élémentaires, ou bolomètres, selon une ou deux dimensions, chaque détecteur élémentaire de ladite matrice étant formé d'une membrane suspendue via des bras de soutien au dessus d'un substrat, généralement réalisé en silicium.

Il est usuellement ménagé dans le substrat des moyens d'adressage séquentiel des détecteurs élémentaires et des moyens d'excitation électrique et de pré-traitement des signaux électriques générés par ces détecteurs élémentaires. Ces moyens d'adressage séquentiel, d'excitation électrique et de pré-traitement sont donc formés dans le substrat et constituent un circuit de lecture.

Pour obtenir l'image d'une scène par l'intermédiaire de ce détecteur, l'image de la scène est projetée à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal électrique est directement lié à la résistance électrique de chaque détecteur élémentaire. Ce signal est traité de manière plus ou moins élaborée par le circuit de lecture, puis éventuellement par un dispositif électronique extérieur au boîtier afin de générer l'image thermique de la scène observée.

Or, il est généralement observé que les matériaux bolométriques habituellement utilisés pour la fabrication d'un bolomètre d'imagerie, comme par exemple du silicium amorphe (a-Si) ou de l'oxyde de vanadium (Vox), présentent une dérive de leur résistance électrique plus ou moins prononcée en fonction du temps.

Dans le cadre de la présente invention, le terme de « dérive » caractérise le fait que, pour des conditions environnementales et de fonctionnement données, désignées ci-après par l'expression « conditions de référence », comme par exemple le rayonnement incident sur le bolomètre, la température ambiante pour celui-ci et les signaux électriques de lecture, la résistance électrique du bolomètre d'imagerie s'écarte lentement au cours du temps de sa valeur initiale, dite de référence observée pour de telles conditions. Cette valeur de référence peut être mesurée dans des conditions de référence lors de la mise en service du détecteur, avant sa mise en service, ou lors d'une opération particulière dite de calibration.

Une raison d'une telle dérive est la relative instabilité naturelle des matériaux thermométriques traditionnellement mis en oeuvre qui peut résulter en des variations de résistivité non négligeables en regard de la précision des images ou mesures thermiques qu'on entend réaliser. Ce type de dérive s'applique ordinairement de manière globale à l'ensemble des points élémentaires du détecteur, et résulte en une dérive globale de calibration.

On peut aussi citer les dérives de résistances induites par l'illumination excessive du détecteur par un flux élevé, comme par exemple lors de l'observation trop prolongée d'une source de rayonnement intense (soleil, projecteur,...). Ces sources de dérive sont dommageables pour la qualité des images thermiques délivrées par le détecteur.

Ce type de dérive s'applique ordinairement de manière localement limitée sur la surface sensible du détecteur, et résulte en une erreur de calibration spatialement dispersée du détecteur.

**EXPOSE DE L'INVENTION**

Le but de la présente invention est donc de fournir un détecteur qui reste précis, c'est-à-dire bien calibré, et précisément dont les signaux de sortie restent identiques lorsqu'on replace le détecteur dans les conditions dites de référence, tout au long de son cycle de vie, même en présence d'une dérive spatiale et/ou temporelle de ses éléments sensibles.

A cet effet, l'invention a pour objet un dispositif pour la détection d'un rayonnement infrarouge comportant un bolomètre résistif.

Selon l'invention, ce dispositif comporte

■ des moyens de mesure d'une dérive de la résistance électrique dudit bolomètre par rapport à une valeur de référence de la résistance électrique dudit bolomètre correspondant à des conditions prédéterminées de fonctionnement dudit bolomètre ; et
■ des moyens de correction des effets de ladite dérive ou des moyens de correction de ladite dérive de la résistance.

Selon un mode de réalisation de l'invention, les moyens de mesure comprennent :

■ un bolomètre résistif de référence sujet à ladite dérive ;
■ des moyens de mesure de la résistance électrique du bolomètre de référence ; et
■ des moyens de détermination de ladite dérive en fonction de la résistance électrique mesurée.

Plus particulièrement, le bolomètre de référence est un bolomètre de compensation associé au bolomètre d'imagerie.

En variante, le bolomètre de référence est le bolomètre d'imagerie.

Selon un mode de réalisation de l'invention, les moyens de mesure de la résistance électrique du bolomètre de référence comprennent :

■ des moyens d'intégration d'un courant traversant elui-ci ; et
■ des moyens de détermination de la résistance électrique du bolomètre de référence en fonction du courant intégré par les moyens d'intégration.

Selon un mode de réalisation de l'invention, les moyens de mesure de la résistance électrique du bolomètre de référence comprennent :

■ une résistance de résistance électrique prédéterminée apte à être connectée au bolomètre de référence ;
■ des moyens d'intégration d'une différence de courants traversant le bolomètre de référence et la résistance ; et
■ des moyens de détermination de la résistance électrique du bolomètre de référence en fonction de la différence de courants intégrée par les moyens d'intégration.

Plus particulièrement, un circuit de mesure de la résistance électrique du bolomètre d'imagerie par intégration d'un courant traversant celui-ci, destiné à la mesure d'une température du rayonnement infrarouge, et les moyens d'intégration appartiennent audit circuit de mesure.

Selon un mode de réalisation de l'invention, les moyens de correction comprennent des moyens de commande de la température du bolomètre d'imagerie de manière à compenser ladite dérive.

Selon un mode de réalisation de l'invention, le dispositif comporte en outre des moyens de mesure d'une résistance électrique du bolomètre d'imagerie et des moyens (30) de détermination d'une température du rayonnement incident sur celui-ci en fonction de la résistance électrique mesurée et d'au moins un paramètre dépendant de la résistance électrique du bolomètre d'imagerie, et les moyens de correction sont aptes à corriger ledit au moins un paramètre en fonction de la dérive mesurée de manière corriger l'effet de celle-ci dans la détermination de la température.

Selon un mode de réalisation de l'invention, ledit au moins un paramètre est une sensibilité électrique à la température d'un circuit de mesure de la résistance électrique du bolomètre d'imagerie.

L'invention a également pour objet un système comportant au moins une ligne de dispositifs de détection dudit rayonnement.

Selon l'invention, les dispositifs sont chacun du type susmentionné.

L'invention a également pour objet un procédé de lecture d'un bolomètre résistif d'une matrice de bolomètres constitutive d'un système de détection d'un rayonnement infrarouge, ledit procédé comportant :

■ une étape de mesure d'une dérive de la résistance électrique dudit bolomètre par rapport à une valeur de référence de la résistance électrique dudit bolomètre correspondant à des conditions prédéterminées de fonctionnement de celui-ci ; et
■ une étape de correction des effets de ladite dérive ou une étape de correction de la dérive de la résistance.

## BREVE DESCRIPTION DES FIGURES

L'invention sera mieux comprise à la lecture de la description qui va suivre, donnée uniquement à titre d'exemple et réalisée en relation avec les figures annexées, dans lesquelles des références identiques se rapportent à des éléments identiques ou analogues, et dans lesquelles :

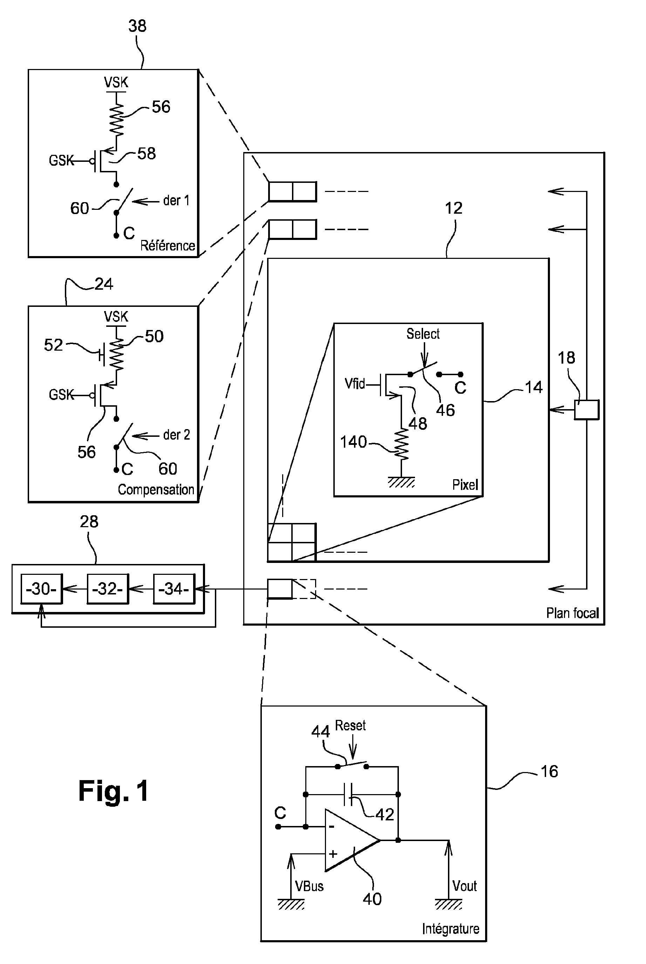

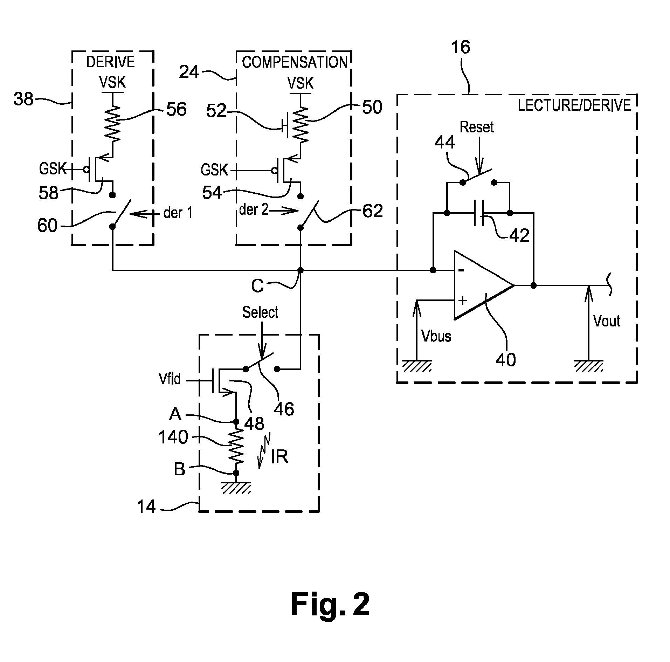

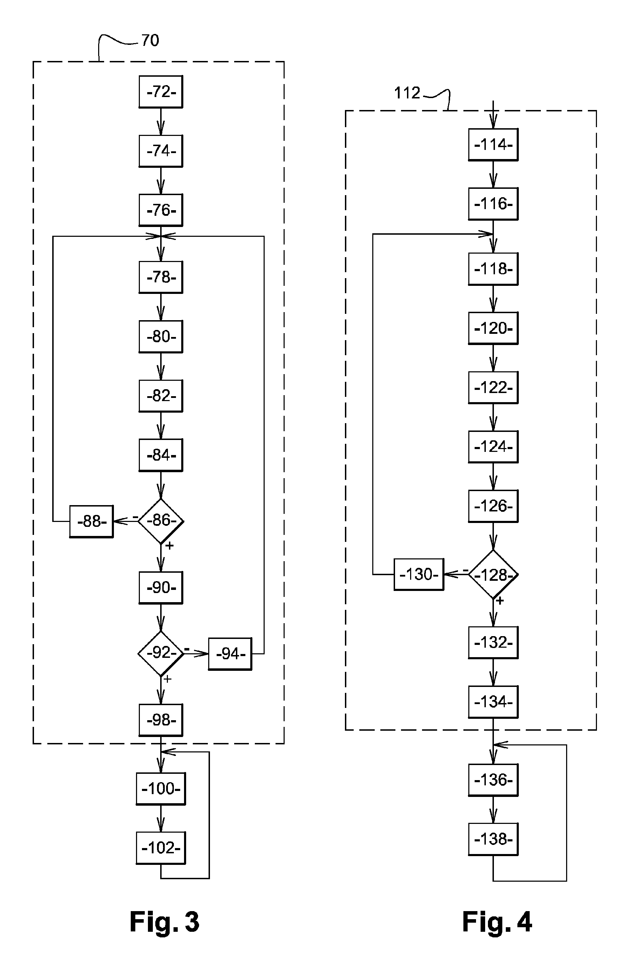

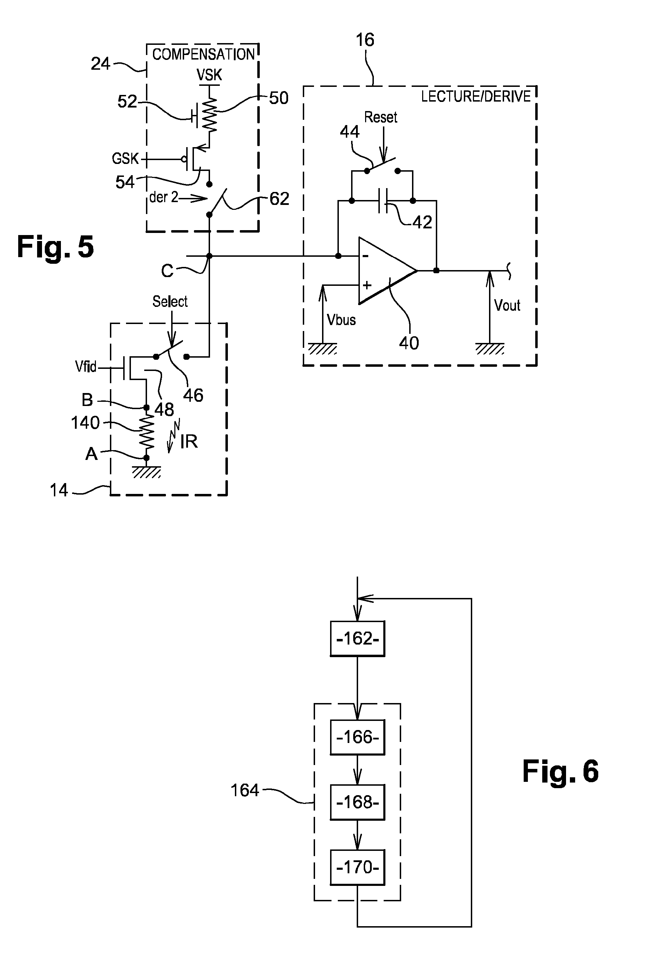

■ la figure 1 est une vue schématique d'un détecteur bolométrique selon un premier et un second mode de réalisation selon l'invention ;
■ la figure 2 est une vue schématique d'un agencement élémentaire entrant dans la constitution du détecteur de la figure 1 ;
■ la figure 3 est un organigramme d'un procédé de mesure et de compensation de dérive selon le premier mode de réalisation ;
■ la figure 4 est un organigramme d'un procédé de mesure et de compensation de dérive selon le deuxième mode de réalisation de l'invention ;
■ la figure 5 est une vue schématique d'un agencement élémentaire d'un troisième et quatrième modes de réalisation de l'invention ; et
■ la figure 6 est un organigramme de mesure et de compensation de dérive selon un cinquième mode de réalisation selon l'invention.

## DESCRIPTION DETAILLEE DE L'INVENTION

La figure 1 illustre de manière schématique un détecteur bolométrique **10**. Un tel détecteur **10** comprend :

■ une matrice bidimensionnelle **12** comprenant $\underline{n}$ lignes et $\underline{m}$ colonnes de points élémentaires d'imagerie **14,** comprenant chacun un bolomètre résistif **140**, où $\underline{n}$ et $\underline{m}$ sont des entiers supérieurs ou égaux à 1. La matrice d'imagerie 12 est agencée dans le plan focal d'une optique transparente aux infrarouges (non représentée);
■ une ligne de circuits **24** de compensation, chacun associé à une colonne de la matrice **12** et comprenant un bolomètre de compensation **50** ;
■ une ligne d'intégrateurs **16,** chacun associé à une colonne de la matrice **12** ;
■ un circuit d'adressage ligne par ligne **18** de la matrice **12** ;

Comme cela est connu en soi, les bolomètres résistifs et de compensation **140, 50** sont usuellement constitués d'une membrane suspendue par des bras de soutien au dessus d'un substrat dans lequel sont formés les divers éléments électroniques nécessaires à la lecture. Ces éléments électroniques sont usuellement désignés par l'expression « circuit de lecture »

Une telle structure de détecteurs bolométriques est classique et ne sera pas expliquée plus en détail par la suite. Pour de plus amples informations, on pourra utilement se reporter par exemple au document « Uncooled amorphous silicon enhancement for 25μm pixel pitch achievement» de E. Mottin et al, Infrared Technology and Application XXVIII, SPIE, vol. 4820.

Selon l'invention, cette structure est complétée par :

■ une unité de traitement d'informations **28** connecté aux intégrateurs **16** et comprenant un bloc **30** mettant en oeuvre un algorithme de traitement des signaux délivrés par ceux-ci pour déterminer une image infrarouge projetée sur la matrice **12.** A cette fin, l'unité **28** utilise des paramètres de calcul dont une ou plusieurs valeurs de sensibilité électrique des intégrateurs **16** à la température de la scène, ces valeurs étant mémorisées dans un bloc mémoire de l'unité **32**. L'unité **28** comprend également un bloc de correction **34,** qui compense la dérive mesurée des bolomètres d'imagerie **14,** comme cela sera expliqué plus en détail par la suite ; et
■ une ligne de circuits de dérive **38,** chacun associé à une colonne de la matrice **12.**

Les circuits de dérive **38** associés aux intégrateurs **16** forment ensemble un module de mesure des dérives des bolomètres de la matrice **12,** comme cela sera expliqué plus en détail par la suite.

PREMIER MODE DE REALISATION

La figure 2 illustre un agencement élémentaire du détecteur **10** selon un premier mode de réalisation comportant :

■ un point élémentaire d'imagerie **14** de la matrice **12** ;
■ un intégrateur **16** pour la mesure du bolomètre **140** du point d'imagerie **14** ;
■ un circuit de compensation **24** pour la compensation du courant de mode commun circulant dans le bolomètre d'imagerie **140** lors de la lecture de celui-ci ; et
■ un circuit de dérive **38** pour la mesure de la dérive de la résistance électrique du bolomètre **140**.

L'intégrateur **16** comprend :

■ un amplificateur opérationnel **40**, dont l'entrée non inverseuse (+) est mise à une tension constante Vbus prédéterminée ;
■ un condensateur **42,** de capacité $C_{int}$ prédéterminée, connecté entre l'entrée inverseuse (-) de l'amplificateur **40** et la sortie de celui-ci ;
■ un interrupteur de remise à zéro **44** connecté en parallèle du condensateur **42** et pilotable au moyen d'un signal « Reset » commandé par le circuit d'adressage **18** ;

Le circuit **14,** ou « point élémentaire », comprend le bolomètre **140**, qui est soumis à un rayonnement infrarouge IR issu d'une scène et est connecté à un potentiel constant (assimilé à la masse sur les figures) par une première borne **A**. Le point élémentaire comprend en outre :

■ un interrupteur **46** de lecture, pilotable au moyen d'un signal « Select » commandé par le circuit d'adressage **18**, dont une borne est connectée à l'entrée inverseuse (-) de l'amplificateur opérationnel ; et
■ un premier transistor MOS **48** d'injection, dont la grille est mise à une tension Vfid constante prédéterminée, dont la source est connectée à une seconde borne **B** du bolomètre **140,** et dont le drain est connecté à l'autre borne de l'interrupteur **46** de lecture.

Le circuit de compensation **24** du courant de mode commun traversant le bolomètre d'imagerie **140** comprend un bolomètre résistif de compensation **50** réalisé dans le même matériau que le bolomètre d'imagerie **140**, présentant une résistance thermique négligeable vers le substrat et pourvu, de manière optionnelle, d'un écran **52** contre le rayonnement issu de la scène.

Le bolomètre de compensation **50** est connecté à l'une de ses bornes à une tension prédéterminée VSK et à l'autre de ses bornes à la source d'un second transistor MOS d'injection **54** du circuit **24**. Le drain du transistor **54** est connecté à l'entrée inverseuse de l'amplificateur opérationnel **40** et la grille est connectée à une tension prédéterminée GSK.

Le circuit de dérive **38** comporte quant à lui une résistance **56** et un troisième transistor MOS d'injection **58,** agencés de manière analogue au bolomètre de compensation **50** et au second transistor d'injection **54.**

Le circuit de dérive **38** comporte également un premier interrupteur de mesure de dérive **60,** agencé entre le troisième transistor MOS **58** et la borne inverseuse (-) de l'amplificateur opérationnel **40,** et pilotable par le circuit d'adressage **18** au moyen d'un signal « Der1 ».

Enfin, le circuit de compensation est également associé à un second interrupteur de mesure de dérive **62,** disposé dans la branche de compensation **24,** pilotable par le circuit de cadencement **18** au moyen d'un signal « Der2 » et agencé entre le second transistor **54** et la borne inverseuse (-) de l'amplificateur opérationnel **40**.

La résistance **56** est sélectionnée pour présenter une valeur de résistance électrique $R_{ref}$ prédéterminée constante sur le domaine de températures auquel le bolomètre d'imagerie **140** est soumis. Plus particulièrement, la résistance **56** présente une valeur de résistance électrique sensiblement égale à celle du bolomètre d'imagerie **140** dans les conditions initiales de référence. La valeur de la résistance électrique $R_{ref}$ est conservée dans le bloc mémoire **32** de l'unité de traitement d'informations **28.**

Lors d'un cycle de lecture d'une ligne de la matrice d'imagerie **12** pour déterminer la température de la scène détectée par celle-ci, le premier interrupteur de mesure de dérive **60** est ouvert et le second interrupteur de mesure de dérive **62** est fermé. L'interrupteur de remise à zéro **44,** qui est fermé au cours du cycle préliminaire de remise à zéro du condensateur **42**, est basculé dans son état ouvert par le circuit de cadencement **18**. Ce dernier ferme alors l'interrupteur **46** de sélection de lecture. La différence entre le courant traversant le bolomètre d'imagerie **140** et le courant traversant le bolomètre de compensation **50** est alors intégré par le condensateur **42**. Lorsqu'une durée d'intégration $T_{int}$ prédéterminée s'est écoulée depuis la fermeture de l'interrupteur de lecture **46,** le circuit de cadencement **18** ouvre alors celui-ci. La tension $V_{out}$ en sortie de l'intégrateur **16** est alors donnée par l'expression :

$$V_{out} = V_{bus} + \frac{1}{C_{int}} \int_0^{\Delta T_{int}} (i_{imag}(t) - i_{comp}(t)) dt \qquad (1)$$

où t est le temps, $i_{tmag}$ est le courant circulant dans le bolomètre d'imagerie **140** et $i_{camp}$ est le courant circulant dans le bolomètre de compensation **50.**

Comme le courant $i_{camp}$ traversant le bolomètre de compensation **50** est sensiblement égal au courant de mode commun traversant le bolomètre d'imagerie **140,** la différence entre la résistance électrique du bolomètre d'imagerie **140** et la résistance du bolomètre de compensation **50**, qui induit la différence de courant en entrée de l'intégrateur **16,** est alors sensiblement représentative de la variation $\Delta R_{imag}$ de la résistance électrique $R_{imag}$ du bolomètre d'imagerie **140** induite par le rayonnement issu de la scène et incident sur celui-ci.

La tension $V_{out}$ est ensuite envoyée au bloc de calcul **30** de l'unité de traitement d'informations **28,** par exemple à la suite d'une séquence d'échantillonnage - blocage puis multiplexage vers un, ou plusieurs, amplificateur série de sortie, comme cela est connu de l'état de la technique.

Le bloc **30** détermine alors une température $\theta_{scène}$ du rayonnement infrarouge IR incident sur le bolomètre d'imagerie **140** en fonction de la tension $V_{out}$ et des paramètres de calibration, dont la sensibilité $S$ de la tension $V_{out}$ par rapport à la température de la scène du détecteur **10** conservée dans le bloc mémoire **32.**

Les paramètres de calibration sont obtenus lors d'une phase initiale dite de calibration, typiquement par exposition du détecteur **10** devant deux corps noirs portés à deux températures connues spatialement uniformes, qui donne accès aux tables bidimensionnelles dites d'offset et de gain bien connues de l'homme du métier. Chaque élément de ces tables correspondant à un détecteur élémentaire de la matrice d'imagerie. Les termes « gain », « sensibilité » utilisés ici, ou encore « Réponse électrique », se rapportent à la grandeur S = $\Delta V_{out}/\Delta\theta_{scène}$, exprimée habituellement en millivolt par degré Kelvin.

On montre que cette sensibilité $S$ du détecteur **10** s'exprime, de manière générale au premier ordre et pour de faibles variations de résistance, selon la relation :

$$S = \frac{1}{R_{imag} \times C_{int}} \times V_{imag} \times T_{int} \times TCR \times R_{th} \times \Phi(\theta_{scène}) \qquad (2)$$

où :

■ $R_{imag}$ est la résistance électrique de référence du bolomètre **140** sous les conditions de référence prédéterminées ;
■ $V_{imag}$ est une tension de polarisation aux bornes du bolomètre **140** lors de la lecture de celui-ci ;
■ $TCR$ est le coefficient de variation de la résistance électrique du bolomètre **140** en fonction de la température de celui-ci ;
■ $R_{th}$ est la résistance thermique entre le bolomètre **140** et le substrat au dessus duquel il est suspendu ; et
■ $\Phi(\theta_{scèn})$ est le flux d'énergie absorbé par le bolomètre **140**, lequel est fonction de la température de la scène $\theta_{scène}$.

Comme on peut le noter, la sensibilité $S$ est au premier ordre inversement proportionnelle à la valeur $R_{imag}$. On conçoit donc que si la grandeur $R_{imag}$ dérive, le résultat de détermination de la température $\theta_{scène}$ est faussé.

L'agencement et le fonctionnement des éléments venant d'être décrits en relation avec la lecture du bolomètre d'imagerie **140** sont classiques et ne seront donc pas expliqués plus en détail pour des raisons de concision. Pour de plus amples détails, on pourra par exemple se référer au document « Uncooled amorphous silicon enhancement for 25μm pixel pitch achievement » de E. Mottin et al, Infrared Technology and Application XXVIII, SPIE, vol. 4820.

Il va maintenant être décrit en relation avec l'organigramme de la figure 3 un procédé de mesure et de compensation de la dérive des résistances électrique des bolomètres d'imagerie **140** de la matrice d'imagerie **12** mise en oeuvre par un détecteur **10** présentant l'agencement de la figure 2.

Une première étape **70** d'initialisation, mise en oeuvre avant la première utilisation du détecteur **10**, typiquement en usine, consiste à déterminer les valeurs initiales des résistances électriques des bolomètres d'imagerie **140** de la matrice **12** pour des conditions de référence prédéterminées.

A cet effet, en **72,** le détecteur **10** est soumis aux conditions de référence pendant la durée de la mesure des résistances. L'étape **72** consiste notamment à imposer au détecteur **10** une température uniforme connue $\theta_{ref}$ et à soumettre celui-ci à un éclairement thermique $\Phi_{ref}$ uniforme également connu. A cette fin, le détecteur **10** est par exemple muni d'un système de régulation de la température de son plan focal et d'un obturateur, comme cela est connu en soi. Lors de l'étape **72**, le système de régulation de température porte la matrice d'imagerie **12** à la température $\theta_{ref}$, et l'obturateur est fermé pour que celle-ci soit soumise à un éclairement $\Phi_{ref}$ de référence.

Ensuite, en **74**, un compteur de ligne $N_{ligne}$ et un compteur de mesure $N_{mesure}$ du circuit de cadencement **18** sont initialisés à la valeur « 1 ».

En **76,** le circuit de cadencement **18** ouvre les interrupteurs de lecture **46** de la ligne $N_{ligne}$ de la matrice **12.** Le circuit de cadencement **18** ouvre également les premiers et seconds interrupteurs de mesure de dérive **60, 62** et ferme les interrupteurs de remise à zéro **44** de la ligne de circuits d'intégration **16.** Les condensateurs **42** des intégrateurs **16** se déchargent alors presque instantanément.

Le circuit de cadencement **18** ferme ensuite, en **78,** les interrupteurs de lecture **46** de la ligne $N_{ligne}$ de la matrice **12**. En outre, le circuit de cadencement **18** ferme les premiers interrupteurs de mesure de dérive **60** et ouvre les interrupteurs de remise à zéro **44** de la ligne d'intégrateurs **16.** Par chaque agencement de la ligne $N_{ligne}$ illustré à la figure 2, la différence entre le courant $i_{imag}$ circulant dans le bolomètre d'imagerie **140** et le courant $i_{ref}$ circulant dans la résistance de référence $R_{ref}$ **56** commence donc à être intégrée par le condensateur **42**.

Une fois écoulée la durée $T_{int}$, le circuit de cadencement **18** ouvre, en **80,** les interrupteurs de lecture **46** de la ligne $N_{ligne}$ ainsi que les premiers interrupteurs de mesure de dérive **60** de la ligne de circuits de dérive **38**. La tension $V_{out}$ en sortie d'un circuit d'intégration **16** d'un agencement de la figure 2 est alors donnée par l'expression :

$$V_{out} = V_{bus} + \frac{1}{C_{int}} \int_0^{T_{int}} (i_{imag}(t) - i_{ref}(t))dt \qquad (3)$$

Cette tension $V_{out}$ est alors mémorisée après transfert par des moyens classiques, en **82,** par le bloc de correction **34** de l'unité de traitement d'informations **28**. Toujours en **82,** le bloc **34** détermine en fonction de la tension $V_{out}$ la différence entre la résistance électrique $R_{imag}$ du bolomètre d'imagerie **140** et la résistance électrique $R_{ref}$ de la résistance de référence **56.**

Puis, connaissant la valeur $R_{ref}$ qui est conservée dans le bloc mémoire **32** de l'unité **28,** le bloc **34** détermine la résistance électrique $R_{imag}$ du bolomètre d'imagerie **140**. La valeur $R_{imag}$ calculée est ensuite, en **84,** mémorisée dans le bloc mémoire **32**.

Dans une étape **86** optionnelle suivante, un test est mis en oeuvre pour savoir si la valeur d'un compteur de mesure $N_{mesure}$ est égale à une valeur prédéterminée $N_{mesure}^{max}$. Si tel n'est pas le cas, le circuit de cadencement incrémente, en **88,** le compteur $N_{mesure}$ de « 1 », puis l'étape **88** boucle sur l'étape **76** pour un nouveau cycle de lecture de la ligne $N_{ligne}$.

Si le test mis en oeuvre en **86** est positif, le bloc de correction **34** forme, en **90,** pour chaque bolomètre d'imagerie **140** de la ligne $N_{ligne}$, la moyenne temporelle $\overline{R}_{imag}$ des $N_{mesure}^{max}$ dernières valeurs calculées $R_{imag}$ de résistance électrique. La moyenne $\overline{R}_{imag}$ est alors mémorisée dans le bloc mémoire **32.**

Un test est alors ensuite mis en oeuvre en **92** pour savoir si la valeur du compteur de ligne $N_{ligne}$ est égale au nombre de lignes $\underline{n}$ de la matrice **12**. Si tel n'est pas le cas, le circuit de cadencement incrémente, en **94,** la valeur de ce compteur de « 1 », et l'étape **94** boucle sur l'étape **76** pour la lecture de la ligne suivante.

Si tel est le cas, l'ensemble des résistances électriques des bolomètres d'imagerie **140** a été lu, et le procédé se poursuit par une étape **98** dans laquelle la valeur $\overline{R}_{imag}$ de chaque bolomètre d'imagerie **140** est mémorisée dans le bloc mémoire **32** dans une table des résistances électriques de référence $R_{imag}^{ref}$ du bolomètre d'imagerie **140** soumis aux conditions de référence.

L'intérêt de procéder à un moyennage temporel de valeurs de résistance électrique mesurées réside dans la possibilité de filtrer un bruit de mesure sur celle-ci. La valeur moyenne permet d'obtenir une valeur de résistance électrique mesurée plus précise.

L'étape **70** d'initialisation est alors terminée. Le bloc mémoire **32** contient donc à ce stade une matrice de valeurs de référence $R_{imag}^{ref}$ de résistance électrique pour les bolomètres **140** de la matrice **12**.

En complément et suivant un cycle de lecture similaire au moyen du circuit de cadencement **18,** les sensibilités $S_{init}$ des n fois m bolomètres d'imagerie **140** sont mesurées suivant un procédé standard de l'état de la technique au moyen de deux sources de rayonnement (corps noirs uniformes) de températures différentes et sont mémorisées dans le bloc de mémoire **32.** La table de sensibilité $S_{init}$ est copiée dans une table $S$ du bloc mémoire 32 et utilisée comme table opérationnelle de sensibilité pour la mise en oeuvre du détecteur.

Une fois le détecteur **10** mis en service, le procédé se poursuit par une étape **100** de mesure de la dérive en résistance de chaque bolomètre d'imagerie **140** de la matrice **12,** suivie d'une étape 102 de correction de ces dérives.

Les étapes de mesure et de correction de dérive **100, 102** sont par exemple déclenchées régulièrement et/ou périodiquement ou bien à la demande de l'utilisateur du détecteur **10,** quand ce dernier suspecte que le détecteur **10** est sujet à une dérive préjudiciable.

Plus particulièrement, l'étape **100** de mesure de la dérive comprend les étapes **72** à **94** susmentionnées. A l'issue de l'étape **100,** il est donc mémorisé dans le bloc mémoire **32** de l'unité de traitement d'informations 28, une nouvelle mesure moyennée $\overline{R}_{imag}$ de la résistance électrique de chaque bolomètre d'imagerie **14.**

Lors de l'étape de correction **102,** le bloc de correction **34** de l'unité **28** modifie alors la table de sensibilité électrique $S$ du bloc de mémoire **32** en multipliant chacun des éléments de la table $S_{init}$ par le rapport $\dfrac{\overline{R}_{imag}^{ref}}{\overline{R}_{imag}}$ correspondant, et en mémorisant le résultat dans la table $S$ de bloc **32,** qui devient la nouvelle table opérationnelle.

L'étape **102** boucle alors, suivant une périodicité prédéterminée, sur l'étape **100** pour la mesure et la correction de nouvelles dérives des bolomètres d'imagerie **140** de la matrice **12.** La périodicité peut typiquement être de l'ordre du mois ou de l'année.

Comme on peut le constater, le premier mode de réalisation selon l'invention présente l'avantage de ne pas nécessiter une correction « active » des dérives des bolomètres d'imagerie.

Le premier mode de réalisation est applicable à des matrices de microbolomètres, afin par exemple de moduler ou d'annuler les phénomènes de dispersion spatiale de sensibilité, liés aux dérives différentielles de résistances d'un microbolomètre à un autre (tels que typiquement produit par un éblouissement local). Dans ce cas, c'est avantageusement, mais pas nécessairement, la table entière des sensibilités individuelles (appelée table de gain par les familiers du domaine) qui est remise à jour grâce à la mise en oeuvre proposée. Le familier du domaine comprendra qu'il ne s'agit pas d'une recalibration, opération beaucoup plus lourde, mais d'un processus de stabilisation « arithmétique » de la table de gain. De cette manière, l'exactitude de la sensibilité de chaque point d'imagerie est préservée dans le temps sur de très longues durées, sans recalibration.

Comme on peut le noter, dans ce premier mode de réalisation, la correction des dérives des résistances électriques des bolomètres d'imagerie **140** requiert de reconstituer précisément, lors de chaque mesure de dérive, les conditions de référence en vigueur lors de la première mesure de « référence » des résistances $R_{imag}^{ref}$. Ces conditions sont directement obtenues par la disposition dans le détecteur d'un régulateur de température et d'un obturateur, moyens traditionnels du domaine. Cependant, ceci peut s'avérer dans certains cas contraignant pour l'utilisateur

DEUXIEME MODE DE REALISATION

Les inventeurs ont remarqué que, dans la grande majorité des cas, l'évolution temporelle de la dérive des bolomètres de compensation **50** est sensiblement la même que celle des bolomètres d'imagerie **140.** Ceci peut en effet s'expliquer par le fait que les deux types de structures sont intentionnellement et avantageusement élaborés à partir de la, ou des, même(s) couche(s) de matériau sensible, lesquelles subissent ensuite sensiblement la même histoire thermique.

Or, les bolomètres de compensation **50** sont conçus pour être très peu sensibles, et idéalement insensibles au rayonnement issu de la scène. Le second mode de réalisation tire avantageusement partie de ce trait en mesurant la dérive des bolomètres de compensation et en corrigeant la dérive des bolomètres d'imagerie **140** en fonction des dérives mesurées des bolomètres de compensation **50.** Ceci évite donc d'avoir à fixer des conditions d'éclairement (de flux infrarouge) particulières lors de la mesure de dérive, puisque les bolomètres de compensation **50** y sont insensibles. L'utilisateur y gagne donc en confort d'utilisation et/ou il n'est pas nécessaire de prévoir des moyens de fixation de l'éclairement tel un obturateur par exemple, même si il est avantageux de les prévoir.

Selon ce deuxième mode de réalisation, l'agencement élémentaire du détecteur **10,** comportant un bolomètre d'imagerie **140**, un intégrateur **16,** un circuit de compensation **24** et un circuit de dérive **38,** est identique à celui de la figure 2.

Ce deuxième mode de réalisation diffère donc du premier mode de réalisation par le procédé qu'il met en oeuvre. Ce procédé est illustré par l'organigramme de la figure 4.

Le procédé débute par une phase **112** de mesure des résistances électriques des bolomètres de compensation **50** de la ligne de circuits **24**.

Cette phase **112** comprend une étape **114** dans laquelle le détecteur **10** est soumis à des conditions prédéterminées pendant la durée de la mesure des résistances. Ces conditions consistent, pour ce mode de réalisation, à imposer au détecteur **10** la température uniforme connue $\theta_{ref}$.

Ensuite, en **116,** un compteur de mesure $N_{mesure}$ du circuit de cadencement **18** est initialisé à « 1 » et l'ensemble des interrupteurs de lecture **46** de la matrice **12** sont ouverts par le circuit de cadencement **18**.

Puis, en **118,** le circuit de cadencement **18** ouvre les premiers et seconds interrupteurs de mesure de dérive **60, 62** et ferme les interrupteurs de remise à zéro **44** de la ligne de circuits d'intégration **16**. Les condensateurs **42** des intégrateurs **16** se déchargent sensiblement instantanément.

Ensuite, le circuit de cadencement **18** ferme en **120** les premiers et seconds interrupteurs de mesure de dérive **60, 62,** et ouvre les interrupteurs de remise à zéro **44** des lignes de circuits **16**. Pour chaque agencement de circuit de compensation **24**, de circuit de dérive **38** et d'intégrateur **16** illustré à la figure 2, la différence entre le courant $i_{comp}$ circulant dans le bolomètre de compensation **50** et le courant $i_{ref}$ circulant dans la résistance de référence **56** commence donc à être intégrée par le condensateur **42**.

Une fois écoulée la durée $T_{int}$, le circuit de cadencement **18** ouvre, en 122, les premiers et seconds interrupteurs de mesure de dérive **60, 62** de la ligne de circuit de dérive 38. La tension $V_{out}$ en sortie d'un circuit de mesure **22** d'un agencement de la figure 2 est alors donnée par l'expression :

$$V_{out} = V_{bus} + \frac{1}{C_{int}} \int\limits_{0}^{T_{int}} (i_{comp}(t) - i_{ref}(t)) dt \qquad (4)$$

Cette tension $V_{out}$ est alors mémorisée après transfert par des moyens classiques, en **124**, par le bloc de correction **34** de l'unité de traitement d'informations **28**. Toujours en **124,** le bloc **34** détermine ensuite en fonction de la tension $V_{out}$ la différence entre une résistance électrique $R_{camp}$ du bolomètre de compensation **50** et la résistance électrique $R_{ref}$ de la résistance **56**. Puis, connaissant la valeur $R_{ref}$ qui est stockée dans le bloc mémoire **32** de l'unité **28**, le bloc **34** détermine la résistance électrique $R_{comp}$ du bolomètre de compensation **50**. La valeur $R_{comp}$ calculée est ensuite, en **126,** mémorisée dans le bloc mémoire **32**.

Dans une étape **128** optionnelle suivante, un test est mis en oeuvre pour savoir si la valeur d'un compteur de mesure $N_{mesure}$ est égale à la valeur $N_{mesure}^{\max}$. Si tel n'est pas le cas, le circuit de cadencement **18** incrémente en **130** le compteur $N_{mesure}$ de « 1 », puis l'étape **130** boucle sur l'étape **118** pour un nouveau cycle de lecture de la ligne des bolomètres de compensation **50**.

Si le test mis en oeuvre en **128** est positif, le bloc de compensation **34** forme, en **132,** pour chaque bolomètre de compensation **50** de la ligne de circuits de compensation **24,** la moyenne $\overline{R}_{comp}$ des $N_{mesure}^{\max}$ dernières valeurs calculée $R_{comp}$ de résistance électrique.

La moyenne $\overline{R}_{comp}$ est alors mémorisée en **134** dans un espace dédié du bloc mémoire **32** comme valeur de résistance électrique de référence $\overline{R}_{comp}^{ref}$ du bolomètre de compensation **50**.

En complément, et suivant un cycle de lecture similaire au moyen du circuit de cadencement **18,** les réponses $S_{init}$ des n fois m bolomètres d'imagerie **140** sont mesurées suivant le procédé standard de l'état de la technique au moyen de deux sources de rayonnement uniformes de température différentes et sont mémorisées dans le bloc de mémoire **32**. La table $S_{init}$ est ensuite copiée dans la table opérationnelle $S$.

Une fois le détecteur mis en service, le procédé se poursuit par une étape **136** de mesure de la dérive en résistance de chaque colonne de la matrice d'imagerie **12**, suivie d'une étape **138** de correction de cette dérive. Les étapes de mesure et de correction de dérive **136, 138** sont par exemple déclenchées régulièrement et/ou périodiquement ou encore à la demande de l'utilisateur du détecteur **10,** quand ce dernier suspecte que le détecteur **10** est sujet à une dérive préjudiciable.

Plus particulièrement, l'étape **136** de mesure de la dérive comprend les étapes **114** à **132** susmentionnées. A l'issue de l'étape **132,** il est donc mémorisé dans le bloc mémoire **32** de l'unité de traitement d'informations **28,** une nouvelle mesure moyennée $\overline{R}_{comp}$ de la résistance électrique de chaque bolomètre de compensation **50**.

Lors de l'étape de correction **138,** le bloc de correction **34** de l'unité **28** recalcule alors la table opérationnelle de sensibilité électrique $S$ du bloc de mémoire **32** en multipliant chacun des éléments de la table $S_{init}$ par le rapport

$$\frac{\overline{R}_{comp}^{ref}}{R_{comp}} \quad \text{correspondant.}$$

Dans les premier et second modes de réalisation, les intégrateurs **16,** usuellement présents dans le détecteur **10** pour la lecture de la matrice d'imagerie **12**, sont utilisés pour la mesure des dérives de celle-ci.

Or, la valeur de la capacité $C_{int}$ des condensateurs **42** est classiquement sélectionnée pour intégrer une différence entre le courant circulant dans un bolomètre d'imagerie **140** et un bolomètre de compensation **50.**

De fait, il est nécessaire d'utiliser des circuits de dérive **38** comprenant chacun une résistance **56** proche des résistances **140** ou **50,** afin de ne pas saturer les condensateurs **42** lors de la mesure de la dérive des bolomètres d'imagerie **140**.

Toutefois l'utilisation d'une telle résistance **56** induit une imprécision dans cette mesure, par exemple en raison d'une imprécision liée à la dispersion technologique sur la valeur $R_{ref}$ de la résistance électrique de celle-ci.

Selon un troisième et un quatrième mode de réalisation décrits ci-dessous, la mesure de la dérive des bolomètres d'imagerie **140** est réalisée à partir d'une mesure absolue de leur résistance électrique.

## TROISIEME MODE DE REALISATION

Comme cela est visible à la figure 5 qui illustre le troisième mode de réalisation, les éléments de celui-ci diffèrent de ceux décrits en relation avec les figures 1 et 2 en ce que les circuits de dérive **38** sont omis. L'agencement élémentaire du détecteur **10** comprend donc le point élémentaires d'image **14**, l'intégrateur **16** et le circuit de compensation **24**.

Le troisième mode de réalisation met en oeuvre un procédé analogue à celui du premier mode de réalisation décrit en relation avec la figure 3.

La principale différence réside dans le fait que, lors de la mesure de la dérive du bolomètre **140,** le courant intégré par le condensateur **42** n'est plus la différence entre le courant circulant dans le bolomètre d'imagerie **140** et la résistance de référence **56**, mais directement le courant circulant dans le bolomètre d'imagerie **140.**

La seconde différence réside dans le fait que la durée d'intégration est réduite pour éviter que le condensateur **42** ne sature. Ainsi, à la fin d'un cycle d'intégration, la tension $V_{out}$ en sortie de l'intégrateur **16** est donnée par la relation :

$$V_{out} = V_{bus} + \frac{1}{C_{int}} \int_0^{T'_{int}} i_{imag}(t)\,dt \qquad\qquad (5)$$

où $T'_{int}$ est une durée d'intégration réduite sélectionnée pour ne pas saturer le condensateur **42** lors de la mesure de la dérive d'un bolomètre d'imagerie **140**. Le bloc **34** de calcul détermine alors une résistance électrique $R_{imag}$ du bolomètre d'imagerie **140** en fonction de la tension $V_{out}$.

En variante, plutôt que de réduire la durée d'intégration, la valeur de la capacité $C_{int}$ des condensateurs **42** est augmentée de manière à ce que ceux-ci ne saturent pas lors d'une intégration de durée $T_{int}$.

Par exemple, l'intégrateur **16** comporte deux condensateurs, un premier étant sélectionné par le circuit de cadencement **18** lors de la lecture de la matrice d'imagerie **12** et le second étant sélectionné lors de la mesure de la dérive des bolomètres d'imagerie **140.**

## QUATRIEME MODE DE REALISATION

Dans le quatrième mode de réalisation, la mesure et la correction de la dérive des bolomètres d'imagerie **140** est réalisée sur la base de la mesure de la dérive des bolomètres de compensation **50**, pour les mêmes avantages que ceux évoqués pour le deuxième mode de réalisation.

A cet effet, dans le quatrième mode de réalisation, l'agencement élémentaire du détecteur **10** est identique à celui de la figure 5.

Le procédé de mesure et de compensation des dérives est analogue à celui du deuxième mode de réalisation décrit en relation avec la figure 4.

La principale différence réside dans le fait que, lors de la mesure de la dérive du bolomètre **140**, le courant intégré par le condensateur **42** n'est plus la différence entre le courant circulant dans le bolomètre de compensation 50 et la résistance de référence 56 mais directement le courant circulant dans le bolomètre de compensation **50.**

La seconde différence réside dans le fait que la durée d'intégration est raccourcie pour éviter que le condensateur **42** ne sature. Ainsi, à la fin d'un cycle d'intégration, la tension $V_{out}$ en sortie de l'intégrateur **16** est donnée par la relation :

$$V_{out} = V_{bus} + \frac{1}{C_{int}} \int_0^{T'_{int}} i_{comp}(t)dt \qquad (6)$$

Le bloc de correction **34** détermine alors une résistance électrique $R_{camp}$ du bolomètre de compensation **140** en fonction de la tension $V_{out}$.

En variante, plutôt que de diminuer la durée d'intégration, la valeur de la capacité $C_{int}$ des condensateurs **42** est augmentée de manière à ce que ceux-ci ne saturent pas lors d'une intégration de durée $T_{int}$.

Par exemple, l'intégrateur **16** comporte deux condensateurs, un premier étant sélectionné par le circuit de cadencement **18** lors de la lecture de la matrice d'imagerie **12** et le second étant sélectionné lors de la mesure de la dérive des bolomètres de compensation **50.**

Comme on peut le constater, les quatre modes de réalisation selon l'invention permettent une correction spatiale de la dérive de la matrice d'imagerie **12.** En effet, la dérive des bolomètres d'imagerie est compensée bolomètre par bolomètre de ladite matrice (cas des premier et troisième modes de réalisation) ou est compensée colonne par colonne de la matrice d'imagerie **12** (cas des deuxième et quatrième modes de réalisation).

## CINQUIEME MODE DE REALISATION

Selon un cinquième mode de réalisation de l'invention, le détecteur est muni d'un système de régulation de la température de son plan focal. Par exemple, le détecteur est équipé d'un module à effet Peltier ou d'un réchauffeur à effet Joule, bien connus en soi.

Dans ce mode de réalisation, la mesure de la dérive des bolomètres d'imagerie est identique à celle de l'un quelconque des modes de réalisation décrits précédemment en relation avec les figures 1 à 5.

En revanche, la correction des dérives des bolomètres est réalisée de manière « active » en corrigeant la dérive de la résistance électrique de ceux-ci au moyen de la commande de la température du plan focal, comme cela est illustré par l'organigramme de la figure 6.

Sur la figure 6, le procédé de mesure et de correction des dérives des bolomètres d'imagerie **140** comprend, par exemple, une première étape initiale **160** comprenant les étapes **72** à **94** du premier mode de réalisation, suivie d'une étape **162** de mesure de dérive identique à l'étape de mesure **100** du premier mode de réalisation, les étapes **72** - **94** et **100** ayant été décrites précédemment en relation avec la figure 3.

Le procédé se poursuit alors par une phase **164** de correction des dérives mesurées, déclenchée selon les mêmes critères que ceux précédemment décrits.

La phase de correction **164** comporte une première étape **166,** dans laquelle le bloc de correction **34** de l'unité de traitement d'informations **28** calcule une dérive moyenne $\overline{\Delta R}_{imag}$ des n fois m bolomètres **140** de la matrice d'imagerie **12** ou bien une dérive moyenne $\overline{\Delta R}_{comp}$ des bolomètres de compensation **50**. Plus particulièrement, le bloc **34** détermine la moyenne des différences $\overline{R}_{imag} - R_{imag}^{ref}$ associées aux bolomètres d'imagerie **140** de la matrice **12** ou des différences $\overline{R}_{comp} - R_{comp}^{ref}$ associées aux bolomètres de compensation **50.**

Dans une étape **166** suivante, le bloc de correction **34** calcule en fonction de la dérive moyenne $\overline{\Delta R}_{imag}$ (ou $\overline{\Delta R}_{comp}$), une température de consigne $T_C$ pour le système de régulation de la température du plan focal. Cette consigne $T_C$ est calculée de manière à ce que son application au plan focal ait pour effet une diminution de $\overline{\Delta R}_{imag}$ (respectivement $\overline{\Delta R}_{comp}$) des résistances électriques des bolomètres d'imagerie 140. On sait en effet qu'il existe, dans le domaine de fonctionnement du détecteur 10, une relation continûment décroissante entre la température d'un bolomètre d'imagerie 140 et la valeur de sa résistance électrique. Ainsi, commander sa température est équivalent à commander sa résistance électrique.

L'étape de compensation **164** se poursuit donc par une étape **170** de régulation de la température du plan focal sur la température de consigne $T_C$.

Enfin, l'étape **170** boucle sur l'étape **162** pour la mesure d'une nouvelle dérive moyenne $\overline{\Delta R}_{imag}$ et d'une nouvelle consigne de température $T_C$ compensant celle-ci.

Comme on peut le constater, lors du fonctionnement du détecteur **10** pour la formation d'images thermiques de la scène, les bolomètres d'imagerie **14** voient leur résistance électrique diminuée de la valeur $\overline{\Delta R}_{imag}$ à la suite de ce processus de correction par changement de température de plan focal. De ce fait, la dérive de leur résistance électrique est compensée de manière active.

Comme on le notera également, la compensation des dérives du cinquième mode de réalisation est une compensation en moyenne des dérives des bolomètres d'imagerie de la matrice d'imagerie **12.**

La présente invention trouve application dans le domaine des capteurs d'image à détection bolométrique, quelle que soit la bande de fréquences de détection ou du type de matériau bolométrique utilisé pour réaliser les bolomètres d'imagerie et de référence, comme par exemple du silicium amorphe (a-Si), de l'oxyde de vanadium (Vox), de l'oxyde métallique (Ti).

Ainsi, la présente invention trouve application dans :

■ la pyrométrie infra-rouge à micro-bolomètres ;
■ l'imagerie infra-rouge à micro-bolomètres ;
■ l'aide à la conduite et la détection de piétons par imagerie infra-rouge à micro-bolomètres ;
■ la mesure de gaz par imagerie infrarouge à micro-bolomètres ; ou
■ plus généralement dans les mesures physiques à micro-bolomètres.

**Revendications**

1. Dispositif pour la détection d'un rayonnement infrarouge comportant un bolomètre résistif d'imagerie (140), ***caractérisé* en ce qu'**il comporte :

   ■ des moyens (16, 38 ; 16, 24, 38 ; 16, 140 ; 16, 24) de mesure d'une dérive de la résistance électrique dudit bolomètre (140) par rapport à valeur de référence de la résistance électrique dudit bolomètre (140) correspondant à des conditions prédéterminées de fonctionnement dudit bolomètre (140); et
   ■ des moyens (34) de correction des effets de ladite dérive ou des moyens de correction de ladite dérive de la résistance.

2. Dispositif pour la détection d'un rayonnement infrarouge selon la revendication 1, ***caractérisé* en ce que** les moyens de mesure comprennent :

   ■ un bolomètre résistif de référence (140 ; 50) sujet à ladite dérive ;
   ■ des moyens (16, 38 ; 16, 140) de mesure de la résistance électrique du bolomètre de référence (140 ; 50) ; et
   ■ des moyens (34) de détermination de ladite dérive en fonction de la résistance électrique mesurée.

3. Dispositif pour la détection d'un rayonnement infrarouge selon la revendication 2, ***caractérisé* en ce que** le bolomètre de référence est un bolomètre de compensation (50) associé au bolomètre d'imagerie.

4. Dispositif pour la détection d'un rayonnement infrarouge selon la revendication 2, ***caractérisé* en ce que** le bolomètre de référence est le bolomètre d'imagerie (140).

5. Dispositif pour la détection d'un rayonnement infrarouge selon l'une des revendications 2, 3 ou 4, ***caractérisé* en ce que** les moyens de mesure de la résistance électrique du bolomètre de référence (140 ; 50) comprennent :

   ■ des moyens (42) d'intégration d'un courant traversant celui-ci ; et
   ■ des moyens (34) de détermination de la résistance électrique du bolomètre de référence en fonction du courant intégré par les moyens d'intégration.

6. Dispositif pour la détection d'un rayonnement infrarouge selon l'une des revendications 2, 3 ou 4, ***caractérisé* en ce que** les moyens (16, 34, 38) de mesure de la résistance électrique du bolomètre de référence comprennent :

   ■ une résistance (56) de résistance électrique prédéterminée apte à être connectée au bolomètre de référence (140 ; 50) ;
   ■ des moyens (42) d'intégration d'une différence de courants traversant le bolomètre de référence (140 ; 50) et la résistance (56) ; et
   ■ des moyens (34) de détermination de la résistance électrique du bolomètre de référence en fonction de la différence de courants intégrée par les moyens d'intégration.

**7.** Dispositif pour la détection d'un rayonnement infrarouge selon l'une des revendications 5 et 6, *caractérisé* **en ce qu'**il comporte un circuit de mesure de la résistance électrique du bolomètre d'imagerie par intégration d'un courant traversant celui-ci, destiné à la mesure d'une température du rayonnement infrarouge, et **en ce que** les moyens (42) d'intégration appartiennent audit circuit de mesure.

**8.** Dispositif pour la détection d'un rayonnement infrarouge selon l'une quelconque des revendications 1 à 7, *caractérisé* **en ce que** les moyens de correction (34) comprennent des moyens de commande de la température du bolomètre d'imagerie de manière à compenser ladite dérive.

**9.** Dispositif pour la détection d'un rayonnement infrarouge selon l'une quelconque des revendications 1 à 7, *caractérisé:*

■ en ce qu'il comporte en outre des moyens de mesure d'une résistance électrique du bolomètre d'imagerie (140) et des moyens (30) de détermination d'une température du rayonnement incident sur celui-ci en fonction de la résistance électrique mesurée et d'au moins un paramètre dépendant de la résistance électrique du bolomètre d'imagerie (140), et
■ en ce que les moyens (34) de correction sont aptes à corriger ledit au moins un paramètre en fonction de la dérive mesurée de manière corriger l'effet de celle-ci dans la détermination de la température.

**10.** Dispositif pour la détection d'un rayonnement infrarouge selon la revendication *9, caractérisé* **en ce que** ledit au moins un paramètre est une sensibilité électrique à la température d'un circuit de mesure de la résistance électrique du bolomètre d'imagerie (140).

**11.** Système de détection d'un rayonnement infrarouge comportant au moins une ligne de dispositifs de détection dudit rayonnement, *caractérisé* **en ce que** les dispositifs sont chacun conformes à l'une quelconque des revendications 1 à 10.

**12.** Procédé de lecture d'un bolomètre résistif (140) d'une matrice de bolomètres (12) constitutive d'un système de détection d'un rayonnement infrarouge (10), ledit procédé comportant :

■ une étape (100 ; 136 ; 162) de mesure d'une dérive de la résistance électrique dudit bolomètre (140) par rapport à une valeur de référence de la résistance électrique dudit bolomètre correspondant à des conditions prédéterminées de fonctionnement de celui-ci ; et
■ une étape (102 ; 138 ; 164) de correction des effets de ladite dérive ou une étape de correction de ladite dérive de la résistance.

Fig. 1

**Fig. 2**

-70-

-72-

-74-

-76-

-78-

-80-

-82-

-84-

-88- ← − -86-

+

-90-

-92- − → -94-

+

-98-

-100-

-102-

**Fig. 3**

112

-114-

-116-

-118-

-120-

-122-

-124-

-126-

-130- ← − -128-

+

-132-

-134-

-136-

-138-

**Fig. 4**

**Fig. 5**

**Fig. 6**

Europäisches
Patentamt

European
Patent Office

Office européen
des brevets

## RAPPORT DE RECHERCHE EUROPEENNE

Numéro de la demande

EP 09 30 5793

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 01/84118 A (BAE INC [US] BAE SYSTEMS INFORMATION [US]) 8 novembre 2001 (2001-11-08) * page 14, ligne 1 - page 15, ligne 26 * * page 19, ligne 11 - ligne 19 * * page 26, ligne 14 - page 27, ligne 20 * * figure 9 * ----- | 1-12 | INV. G01J5/24 |
| X | WO 98/35212 A (INDIGO SYSTEMS CORP [US]) 13 août 1998 (1998-08-13) * page 31, ligne 1 - ligne 30 * * page 41, ligne 25 - page 44, ligne 18 * * page 51, ligne 23 - page 54, ligne 2 * * figures 54,55 * ----- | 1,12 | |
| | | | DOMAINES TECHNIQUES RECHERCHES (IPC) G01J |

Le présent rapport a été établi pour toutes les revendications

| Lieu de la recherche | Date d'achèvement de la recherche | Examinateur |
|---|---|---|
| Munich | 8 décembre 2009 | Jacquin, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 30 5793

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-12-2009

| Document brevet cité<br>au rapport de recherche | | Date de<br>publication | Membre(s) de la<br>famille de brevet(s) | | Date de<br>publication |
|---|---|---|---|---|---|
| WO 0184118 | A | 08-11-2001 | EP<br>JP | 1279011 A2<br>2003532111 T | 29-01-2003<br>28-10-2003 |
| WO 9835212 | A | 13-08-1998 | AU<br>DE<br>DE<br>EP | 6263498 A<br>69830731 D1<br>69830731 T2<br>1007920 A1 | 26-08-1998<br>04-08-2005<br>04-05-2006<br>14-06-2000 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E. Mottin et al.** Uncooled amorphous silicon enhancement for 25µm pixel pitch achievement. *Infrared Technology and Application XXVIII, SPIE,* vol. 4820